(19) Europäisches Patentamt
European Patent Office
Office européen des brevets

(11) **EP 2 720 027 A1**

(12) **EUROPEAN PATENT APPLICATION**

(43) Date of publication:
**16.04.2014 Bulletin 2014/16**

(51) Int Cl.:
***G01N 21/77*** *(2006.01)*

(21) Application number: **12187958.9**

(22) Date of filing: **10.10.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **ETH Zürich**
**8092 Zürich (CH)**

(72) Inventors:
• **Komarevskiy, Nikolay**
**8053 Zurich (CH)**

• **Hafner, Christian**
**9037 Zurich (CH)**
• **Shklover, Valery**
**8053 Zurich (CH)**
• **Braginsky, Leonid**
**630090 Novosibirsk (RU)**

(74) Representative: **Kley, Hansjörg**
**Siemens Schweiz AG**
**Intellectual Property**
**Freilagerstrasse 40**
**8047 Zürich (CH)**

(54) **Absorption based guided-mode resonance sensor/switch and method for sensing physical changes in various environments**

(57)  Absorption based Guided-Mode Resonance Sensor and method for sensing physical changes in various environments.

The present invention discloses a method and a sensor based on Guided Mode Resonance (GMR) effects for sensing physical changes in various environments (2), the GMR sensor (1) comprising:
- a light source (14) for producing an optical signal;
- a first part (11) designed for interacting with an environment (2);
- a waveguide structure (10) configured for being illuminated by said optical signal incident on a second part (12) of said Guided Mode Resonance sensor (1), wherein said waveguide structure (10) is capable of producing guided-mode absorption resonance during an interaction of said first part (11) with said environment (2);
- a detector (15) capable of measuring absorption resonance occurring in said waveguide structure (10) when illuminated by said optical signal in function of the interaction of said first part (11) with said environment (2) for detecting said physical state change.

FIG 1

EP 2 720 027 A1

**Description**

The invention proposes a new method and device for sensing physical changes in various environments that use Guided Mode Resonance (GMR) absorption effects according to claims 1 and 10.

Earlier described GMR effects in periodic dielectric gratings showed a number of interesting and remarkable phenomena. The excitations of GMRs manifest themselves as strong features in the optical spectra: dips, peaks and cusps. In some cases resonant reflection with the efficiency equal to unity is observed. These phenomena have been studied thoroughly and GMR structures are already used for different sensor applications. For example, US 2012/0140208 A1 describes a GMR sensor assembly including a waveguide structure configured for operation at or near one or more leaky modes, a receiver for input light from a light source onto the waveguide structure to cause one or more leaky transverse electric (TE) and transverse magnetic (TM) resonant modes, and a detector for changes in one or more of the phase, waveshape and/or magnitude of each of a TE resonance and a TM resonance to permit distinguishing between first and second physical states of the waveguide structure or its immediate environment. The physical principle used by GMR sensors is to detect changes in the waveguide structure geometry or in the real part of the refractive index of the GMR sensor waveguide structure by measuring shifts of waveguide structure TE/TM resonant frequency. Indeed, the interaction of the GMR sensor with its surrounding environment may lead to changes in the structure geometry or in the real part of its refractive index that cause TE/TM resonance shifts which can be optically detected. To summarize, prior art GMR sensors are based on reflection/transmission resonance shift measurements in loss-free periodic dielectric gratings for sensing changes of the waveguide structure or environment.

Unfortunately, the prior art GMR sensors have serious disadvantages, namely:

- complex and sophisticated frequency shift measurements, which increase the development and production cost of GMR sensors;
- the necessity of using optically transparent materials for their construction due to the fact that the structure of the waveguide must be loss-free (i.e. $\varepsilon'' = 0$, wherein $\varepsilon''$ is the imaginary part of the dielectric permittivity), and which imposes then strong fabrication constraints, limits their applicability, and finally increases also the production cost;
- the necessity of using an optical detector.

It is therefore an objective of the present invention to provide a method and a device based on Guided Mode Resonance (GMR) effects for sensing physical changes in various environments which overcome the above-mentioned disadvantages and that provide much more degrees of freedom in the design and offer the possibility of low-cost sensors/switches with higher sensitivity.

This objective is achieved according to the present invention by a method for sensing a physical state change in a near field or far field surrounding environment, the method comprising the following steps:

- positioning a GMR sensor so that at least a first part of said GMR sensor is able to interact with said environment;
- illuminating a waveguide structure of said GMR sensor by means of an optical signal incident on a second part of said GMR sensor, wherein said waveguide structure is configured for responding to the interaction of its first part with the environment by a change of at least one absorption resonance of an absorption resonant guided mode that characterizes said waveguide structure. For example, during said interaction, the waveguide structure is characterized by at least one absorption resonant guided-mode, respectively by no resonant absorption guided-mode, and before and/or after said interaction, the waveguide structure is characterized by no absorption resonant guided-mode, respectively by an absorption resonant guided-mode. In particular the waveguide structure has at least one absorption resonant guided-mode if and only if an interaction between said first part and said environment occurs. In other words, the wave guide structure response to the illumination by said optical signal is preferentially a guided-mode absorption resonance if and only if an interaction between said first part and the environment occurs, otherwise, if said first part and said environment are free of interaction with one another, then said response is for example a transmission and/or a reflection of said optical signal. In particular, said waveguide structure is configured for operation at at least one resonant leaky mode, also called quasiguided mode, and comprises preferentially at least one constituent material characterized, during or before, or after, or before and after said interaction of the first part with said environment, by a complex dielectric permittivity $\varepsilon = \varepsilon' + i \cdot \varepsilon''$, where $\varepsilon'$ is the real part of the dielectric permittivity and $\varepsilon''$ is its imaginary part. The waveguide structure is therefore capable of producing guided-mode absorption resonance preferentially only during interaction of the first part with said environment. For example, the dielectric permittivity of the constituent material becomes a complex dielectric permittivity at least during the interaction of the first part with said environment, and might be real before and/or after said interaction;
- measuring energy loss or absorption resonance occurring in said waveguide structure illuminated by said optical signal in function of the interaction of said first part of the GMR sensor with said environment for detecting said physical state change. In other words, the method according to the invention measures a change of the absorption resonance of said waveguide structure that results from the interaction of said first part with the environment.

The present invention concerns also a GMR sensor for sensing a physical state change of an environment, said GMR sensor comprising:

- a first part designed for interacting with said environment;
- a waveguide structure configured for being illuminated by an optical signal incident on a second part of said GMR sensor, wherein said waveguide structure is configured for responding to the interaction of its first part with the environment by a change of at least one absorption resonance of an absorption resonant guided mode that characterizes said waveguide structure. In particular the waveguide structure is characterized by at least one absorption resonant guided-mode only if an interaction between said first part and said environment occurs. In particular, the waveguide structure is configured for operating at at least one resonant leaky mode and is in particular characterized by at least one complex eigenfrequency $\omega = \omega_1 + i \cdot \omega_2$. Preferentially, the waveguide structure comprises at least one constituent material characterized, during said interaction of the first part with said environment, by a complex dielectric permittivity $\varepsilon = \varepsilon' + i \cdot \varepsilon''$ (for example a metal, or a lossy dielectric), where $\varepsilon'$ is the real part of the dielectric permittivity and $\varepsilon''$ is its imaginary part. Said constituent material might be anywhere in said waveguide structure. The waveguide structure according to the invention is thus capable of producing guided-mode absorption resonance preferentially only during the interaction of its first part with said environment;
- a light source for producing said optical signal or wave, in particular capable of exciting at least one resonant leaky mode of the waveguide structure;
- a detector capable of measuring energy loss or absorption resonance occurring in said waveguide structure when illuminated by said optical signal in function of an interaction of said first part of the GMR sensor with said environment for detecting said physical state change. Said detector is thus in particular capable of measuring a change of the absorption resonance of said waveguide structure that results from the interaction of said first part with the environment.

The present invention concerns thus high sensitivity Absorption-Based GMR (AGMR) sensors or switches based on the effects of resonance reflection/transmission and resonance absorption in lossy waveguide structures, which comprise for example a lossy periodic grating and/or lossy material somewhere in AGMR. While prior art GMR sensors are constituted of free-loss optically transparent periodic dielectric gratings that can give rise to strong resonant reflections, the present invention describes AGMR sensors, wherein the presence of very small losses in the waveguide structure allows to convert reflection resonances into absorption resonances. Advantageously, the sensitivity of the waveguide structure with respect to losses $\varepsilon''$ (imaginary part of the dielectric permittivity, which represents the energy absorption by the waveguide structure) is significantly higher than for the commonly considered change in the real part $\varepsilon'$ of the dielectric permittivity that is at the basis of spectral shifts of TE/TM resonance described in the prior art techniques. In fact, absorption effects may be stronger than those caused by the change of the real part of refractive index of the waveguide structure.

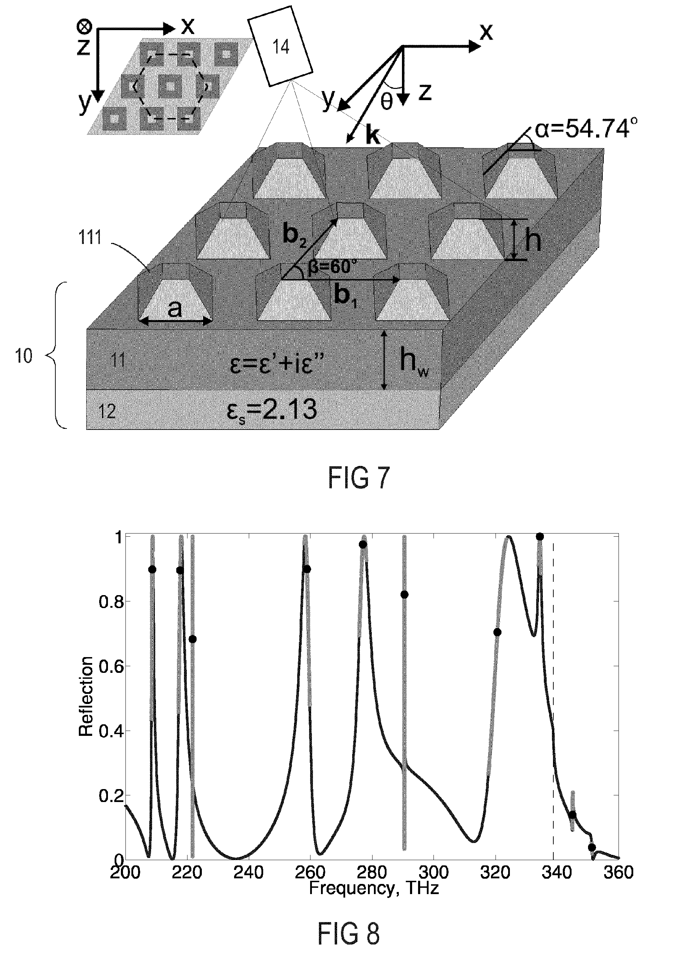

Preferentially, the light source according to the invention is a converging or diverging light, which amplitude, and/or phase and/or frequency are tuneable in function of the waveguide structure characteristics, so that the optical wave or signal radiated by said light source is able of exciting at least one leaky mode of the waveguide structure. The light source may preferentially provide an incident optical signal which is incident normally or obliquely on said second part of the waveguide structure. In particular, said second part and said first part coincide. In other words, said optical signal might be incident on said first part. In particular, the light source might be a light emitting diode, or a laser diode, or a source of polarized or unpolarized light, white light, etc. Preferentially, the frequency of the optical signal should be equal or higher than the diffraction threshold frequency into the waveguide structure. This diffraction threshold frequency depends on the material constituting the waveguide structure and on at least one period characterizing an arrangement of units of a periodic structure of the first part. For example, a typical frequency f for the optical signal in the case of a periodic structure being a skew unit cell of equal unit vectors (see Fig. 7) might be chosen so that

$$f \geq \frac{c}{\sqrt{\varepsilon}\, d \sin \beta} \; .$$

The detector according to the invention is in particular able to detect if the absorption resonance, i.e. if an energy absorption in said waveguide structure, exceeds a threshold value. In particular, said detector is able to measure a shift of the absorption resonance of the waveguide structure. In particular, said detector might also be able to measure a shift of reflection resonance of said waveguide structure and/or an absorption magnitude. For example, said at least one constituent material of the waveguide structure is characterized by an imaginary part $\varepsilon''$ which value is small enough for allowing a differentiation by said detector between absorption at a resonant frequency and absorption outside of said resonant frequency. In other words, the value of the imaginary part $\varepsilon''$ is preferentially chosen for leading to high absorption at resonant frequencies compared to non-resonant frequencies. The sensing principle is then that either the real part $\varepsilon'$ of the dielectric permittivity of at least one part of said constituent material or a geometric parameter of the waveguide structure is changed under external influence of said environment, while the imaginary part $\varepsilon''$ remains constant. The above-mentioned changes (change of the real part $\varepsilon'$ or change of a geometric parameter of the waveguide structure) cause a shift of the absorption resonance, which can be detected by said detector, since for example, the energy transferred from the incident optical signal to the waveguide structure will accordingly change.

Preferentially, said first part is configured for causing a change of said imaginary part $\varepsilon''$ when interacting with said environment or under the influence of said environment. In particular, said first part comprises said constituent material, which might be or not in contact with said environment. In particular, said first part comprises a first surface that is designed for interacting with said environment. In particular, said first part and/or its first surface may comprise said constituent material which might in particular interact with said environment. Preferentially, the waveguide structure comprises said first part. In other words, said first part is for example a first surface of the waveguide structure designed for interacting with said environment. For example, said first surface of the waveguide structure is a layer configured for covering the waveguide structure, e.g. a bio-selective layer or a graphene layer, that is designed for specifically interacting with said environment, e.g. for interacting with one or several specific targets of said environment. According to a preferred embodiment of the present invention, said interaction with the environment leads to a change of the imaginary part $\varepsilon''$ of the constituent material of said first part of the waveguide structure. The change of the imaginary part $\varepsilon''$ somewhere in the constituent material is then detected by said detector as absorption variations. For example, the detector is or comprises an optical detector and/or a temperature sensor. The temperature sensor is in particular able to detect temperature variations of the waveguide structure, said temperature variations resulting from the absorption variations, i.e. change of the absorption resonance, and depending therefore in particular on the imaginary part $\varepsilon''$. Preferentially, said optical detector measures a change of the reflection and/or transmission of the optical signal after its interaction with the GMR sensor according to the invention, in order to deduce absorption resonance.

According to other preferred embodiments of the present invention, the GMR sensor is configured for having a change of the imaginary part $\varepsilon''$ of its constituent material caused by:

- a change of the temperature of said environment: depending on the constituent material, temperature can have a strong or negligible impact on the imaginary part $\varepsilon''$ of said constituent material, and thus on losses or absorption. In particular, said constituent material might be a semiconductor for strong impact, or a metal for negligible impact. Accordingly, the GMR sensor according to the invention might be used as a temperature sensor;

- gasochromic mechanism: as example, the constituent material comprises tungsten trioxide ($WO_3$) which changes its losses when the incorporation of hydrogen gas ($H_2$) occurs. In this case, said first part comprises in particular the constituent material which is in direct interaction with said environment. This feature can be used for designing absorption GMR gas sensors;

- a change of the electric and/or magnetic field: the optical properties of the waveguide structure can be modified in the presence of electric and/or magnetic fields for giving rise to change of the absorption detectable by said detector. Magneto-resistance is a typical example. Also the applied stress can create charges (or the electric field in the material), which can in turn modify the material losses, i.e. the imaginary part $\varepsilon''$. The GMR sensor according to the invention might consequently be used as high-efficiency switches, pressure/strain/vibration sensors are possible;

- external light source: for example, visible and UV radiation can change the concentration of free carriers in the constituent material and therefore modify the constituent material losses, said constituent material being for instance a semiconductor. The GMR sensor according to the invention might consequently be used for sensing light intensity and dynamic holographic recording;

- adsorption: the constituent material might in particular be an adsorbent configured for directly interacting with said environment and for adsorbing atoms, and/or ions, and/or molecules from a gas, or liquid, or dissolved solid. Said adsorption creates an adsorbate layer on the surface of the constituent material which is able to change the absorption or losses of the waveguide, and thus might be detected by said detector. The GMR sensor according to the invention might consequently be used for a determination of chemical composition of a gas, or liquid, or dissolved solid.

Therefore, the method according to the invention preferentially comprises:

- a measure of a variation of a magnitude of the absorption resonance, wherein said variation of the magnitude results mainly from a change of the imaginary part of the dielectric permittivity occurring during the interaction of said first part with said environment; or

- a measure of a spectrum variation of a transmitted and/or reflected light by the GMR sensor, for example said variation being a spectrum shift of the transmitted and/or reflected light, wherein said spectrum variation results mainly from a change of the real part of the dielectric permittivity occurring during the interaction of said first part with said environment; or

- a measure of the absorption resonance magnitude variation combined to a measure of said spectrum variation, wherein said magnitude and respectively spectrum variation result from a change of the imaginary part and respectively real part of the dielectric permittivity during the interaction of said first part with the environment.

Preferentially, the waveguide structure comprises said second part. In particular, said second part is a second surface of the waveguide structure configured for receiving the optical signal as input. In particular, said second part of the GMR sensor comprises at least one optical element for shaping said optical signal before it reaches the waveguide structure, e.g. said second surface, so that the optical signal outputted by said optical element and designed for illuminating the waveguide structure, e.g. said second surface, has a known amplitude, and/or phase and/or frequency. In particular, said optical element is designed for optimizing the optical signal distribution on said waveguide structure, e.g. on said second surface or second part of the waveguide structure.

According to the present invention, small losses occurring in the waveguide structure give rise to very strong absorption peaks that may appear near resonant reflections and cusps. Advantageously and according to preferred embodiments of the invention that will be described later, these absorption peaks can reach unity and the reflection can accordingly drop from unity to zero, while the resonance position itself may not exhibit any significant spectral shift, which is favourable for the design of absorption-based GMR sensors. The absorption-based GMR sensors according to the present invention can advantageously be used for measurements of gas composition, pressure, angles of incident radiation, biochemical composition, and electric currents and field. They can also be designed for being used as new optical switches utilizing the effect of resonant absorption as presently described.

Preferred embodiments of the present invention are hereinafter described with more detail referring to the following drawings:

Figure 1     schematic illustration of a preferred embodiment of a GMR sensor according to the invention.

Figure 2     schematic illustration of a waveguide structure with a sinusoidal interface.

Figure 3     total reflection and absorption for the waveguide structure presented in Figure 2.

Figure 4     absorption at first resonance near $k_0/G = 0.5$ as function of $\varepsilon''$ for the waveguide structure presented in Figure 2.

Figure 5     angular dependence of the absorption of the waveguide structure presented in Figure 2.

Figure 6     dispersion diagram of the waveguide structure presented in Figure 2 with flat interfaces ($\gamma = 0$, $\varepsilon'' = 0$).

Figure 7     schematic illustration of a first preferred embodiment of a waveguide structure according to the invention.

Figure 8     total reflection of the waveguide structure according to the first preferred embodiment, wherein the imaginary part $\varepsilon'' = 0$.

Figure 9     absorption spectra of the waveguide structure according to the first preferred embodiment, wherein the imaginary part $\varepsilon'' > 0$.

Figure 10     reflection spectra of the waveguide structure according to the first preferred embodiment, wherein the imaginary part $\varepsilon'' > 0$.

Figure 11     schematic illustration of a second preferred embodiment of a waveguide structure according to the invention.

Figure 12     reflection and absorption spectra of the waveguide structure according to the second preferred embodiment.

Figure 13     schematic illustration of a third preferred embodiment of a waveguide structure according to the invention.

Figure 14     schematic illustration of a fourth preferred embodiment of a waveguide structure according to the invention.

Figure 15    absorption spectra of the waveguide structure according to the third preferred embodiment for different $\varepsilon_a"$ values ($\varepsilon"=0$).

Figure 16    angular dependence of the absorption of the waveguide structure according to the first preferred embodiment with $\varepsilon" = 0.005$.

Figure 17    angular dependence of the absorption of the waveguide structure according to the second preferred embodiment with $\varepsilon" = 0.0667$.

Detailed description

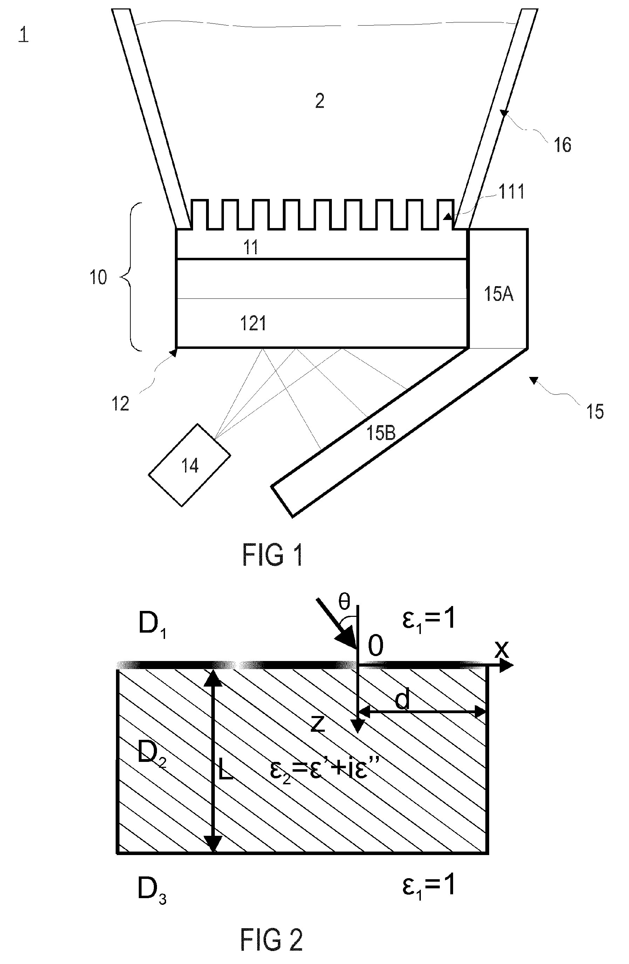

Figure 1 illustrates a preferred embodiment of a GMR sensor 1 according to the invention which is able to produce guided-mode absorption resonance in response to a specific interaction with an environment 2. The GMR sensor 1 comprises:

- a first part 11 designed for interacting with the environment 2, and which may in particular comprise at least one element or structure for coupling diffracted fields of an optical signal to at least one mode of a waveguide structure, said element or structure being for example a prism, or one or several periodic structures, wherein each periodic structure may comprise one or more units 111 periodically arranged for forming said periodic structure. Said first part 11 might be in direct contact with said environment 2 or may be free of contact with said environment 2;
- said waveguide structure 10 configured for being illuminated by said optical signal incident on a second part 12, or even on the first part 11 of said GMR sensor 1, said waveguide structure 10 comprising in particular said first part 11 and said second part 12. The waveguide structure 10 is able to change the absorption resonance of at least one of its absorption resonant guided-modes in response to the interaction of its first part 11 with the environment 2.The waveguide structure 10 according to the invention is configured for operating at at least one resonant leaky mode. Preferentially, the waveguide structure 10 comprises at least one constituent material characterized by a complex dielectric permittivity $\varepsilon = \varepsilon' + i\cdot\varepsilon"$ (for example a metal, or a lossy dielectric), where $\varepsilon'$ is the real part of the dielectric permittivity and $\varepsilon"$ is its imaginary part. Preferentially, said constituent material is able to change the imaginary part $\varepsilon"$ of its dielectric permittivity in function of its interaction with said environment or under the influence of said environment which is interacting with said first part 11. Preferentially only said first part 11 comprises said constituent material. Preferentially, the second part 12 of the GMR sensor 1 comprises at least one optical element 121 for shaping said optical signal;
- a light source 14 for producing said optical signal or wave, in particular capable of exciting at least one resonant leaky mode of the waveguide structure 10, notably of said first part 11;
- a detector 15 capable of measuring absorption resonance or absorption resonant effects occurring in said waveguide structure 10 when illuminated by said optical signal. In particular, said detector 15 may comprise a temperature detection system/sensor 15A and/or a spectrometer/optical detector 15B for analyzing various responses of the waveguide structure 10 in function of its interaction with said environment 2.

Said first part 11 of the waveguide structure is configured in such a way that a physical state change of said environment 2 results in an interaction of said environment 2 with said first part 11 that causes a change of the losses or absorption of the waveguide structure 10. Therefore, the measurement by said detector 15 of the energy loss and/or absorption resonant effects and/or absorption resonance occurring in said waveguide structure 10 illuminated by said optical signal is a function of the interaction of said first part 11 with said environment 2. For example, if energy loss is detected by the detector 15, then, one can conclude that a change of physical state of said environment 2 occurred. Preferentially, the GMR sensor according to the invention is equipped with a container 16 configured for containing said environment 2 in contact or in a close vicinity of the first part 11.

For instance, said environment 2 is characterized by a first physical state and a second physical state, wherein said environment 2 does not interact with said first part 11 when it is in said first physical state, and interacts with said first part 11 when it is in said second physical state. Said environment 2 might be a gas, a fluid or a mix of solid and fluid. The interaction of said environment 2 in the second physical state with the first part 1 is able to cause a change of the energy absorption capacity of the waveguide structure 10. In other words, for the same energy quantity radiated by the light source and illuminating said waveguide structure, there will be an increase of the waveguide structure absorbed energy when said environment is characterized by said second physical state compared to the absorbed energy when said environment is characterized by said first physical state. Due to this change of absorbed energy, the temperature of the waveguide structure 10 may increase (transfer of the optical signal energy to the waveguide structure 10 in the form of heat) and exceed a threshold value predefined in said detector 15, which will give rise to the detection of the change of physical state of the environment from said first physical state to the second physical state, and inversely.

To better understand the phenomenon at the basis of the present invention, let us consider the light reflection from a dielectric slab with a periodic boundary on the top as represented in Figure 2, wherein L = d = 100 nm. We assume that the dielectric permittivity at the upper interface has the form:

$$\varepsilon(x,z) = \varepsilon_1 + (\varepsilon_2 - \varepsilon_1)\theta(z) + 2\gamma\delta(z)\cos(Gx) \quad (1)$$

where $\theta(z)$ and $\delta(z)$ are Heaviside step and Dirac delta functions, $G = 2\pi/d$, where d is the period of the corrugated interface. The dielectric permittivities of the slab surrounding environment and slab constituent material are respectively $\varepsilon_1 = 1$ and $\varepsilon_2 = \varepsilon' + i\varepsilon''$, wherein typically, $\varepsilon' = 4$. The relative magnetic permeability is $\mu = 1$ for both the slab surrounding environment and slab constituent.

For a thin interface the scattering problem can be considered in terms of the boundary conditions for the electric (or magnetic) field of the light. Assume the electric field of the incident wave to be polarized in the y direction. The boundary conditions for the electric field E = {0, E(x, z), 0} can be obtained after integrating the wave equation over some narrow region ($|z| < \delta/2$) at the boundary z = 0:

$$\frac{\partial^2 E}{\partial x^2} + \frac{\partial^2 E}{\partial z^2} + k_0^2\varepsilon(x,z)E = 0 \quad (2)$$

where $k_0 = \omega/c$, $\omega$ is the frequency of light, c is the speed of light in vacuum. Assuming $\delta \to 0$, we find

$$[E] = 0, \left[\frac{\partial E}{\partial z}\right] + 2k_0^2\gamma E(x)\cos(Gx) = 0 \quad (3).$$

Square brackets denote the discontinuity of the corresponding value at the boundary. To obtain the first equation of (3), we multiplied Eq. (2) by z before the integration by parts. The first boundary condition of (3) assumes continuity of the tangential component of the electric field. The second one is the generalization of the boundary condition for the tangential component of the magnetic field.

Electric field E(x) at the periodic boundary can be represented as:

$$E(x) = \sum_n E_n e^{iG_n x}$$

Thus, boundary conditions for the coefficients $E_n$ of the n-th band are:

$$[E_n] = 0, \left[\frac{\partial E_n}{\partial z}\right] + k_0^2\gamma(E_{n+1} + E_{n-1}) = 0 \quad (4)$$

Equations (4) are the particular case of the boundary conditions for the envelope functions of the light waves proposed by L. Braginsky and V. Shklover in "Light propagation in an imperfect photonic crystal" (Phys. Rev. B 73, 085107 (2006)). Diffraction can therefore also be interpreted as a band mixing at the interface. The simple cosine boundary of Eq. (1) results in the mixing of adjacent bands. In general however, a periodicity of the boundary results in the mixing of many bands. The amount of mixing is proportional to the Fourier component of the dielectric permittivity at the boundary.

To consider light reflection from a dielectric grating, let us represent the electric field in the domain $D_m$:

$$E(x,z) = \sum_n A_n^+ \exp(i\alpha_n x + i\beta_n^{(m)} z) + \sum_n A_n^- \exp(i\alpha_n x - i\beta_n^{(m)} z) \quad (5)$$

where

$$\alpha_n = k_x + Gn, \ k_x = k_0 \sin\theta \quad (6)$$

$$\beta_n^{(m)} = (\varepsilon_m k_0^2 - \alpha_n^2)^{1/2}, \ \mathrm{Re}\{\beta_n^{(m)}\} + \mathrm{Im}\{\beta_n^{(m)}\} > 0 \quad (7)$$

here $A_n^{\pm}$ are the unknown field amplitudes to be determined. All the incoming amplitudes should be zero, except the one, which corresponds to the incident field. Therefore, in domain $D_1$, $A_n^+ = 0$, for all $n \neq 0$. In domain $D_3$, $A_n^- = 0$, for all *n.*

The boundary conditions given in Eq. (4) can be implemented in a straight forward way to the recursive numerically stable S-matrix algorithm as presented by L. Li in "Formulation and comparison of two recursive matrix algorithms for modeling layered diffraction gratings (J. Opt. Soc. Am. A/13, 1024-1035 (1996)). Thus, the analytical expressions for the field amplitudes $A_n^{\pm}$ can be obtained. To obtain the total reflectivity the z-component of the time-averaged Poynting vector should be analyzed:

$$\overline{S}_z = \frac{c}{8\pi} \mathrm{Re}[E \times H^*]_z = -\frac{c}{8\pi} E_y H_x^* \quad (8)$$

Substituting E from Eq. (5) and $H_x = i(k_0)^{-1} \partial E / \partial z$ after averaging over x gives

$$R = \sum_p \frac{\beta_p^{(1)}}{\beta_0^{(1)}} \left| A_p^- \right|^2 \quad (9)$$

where the summation is carried over propagating orders in $D_1$.

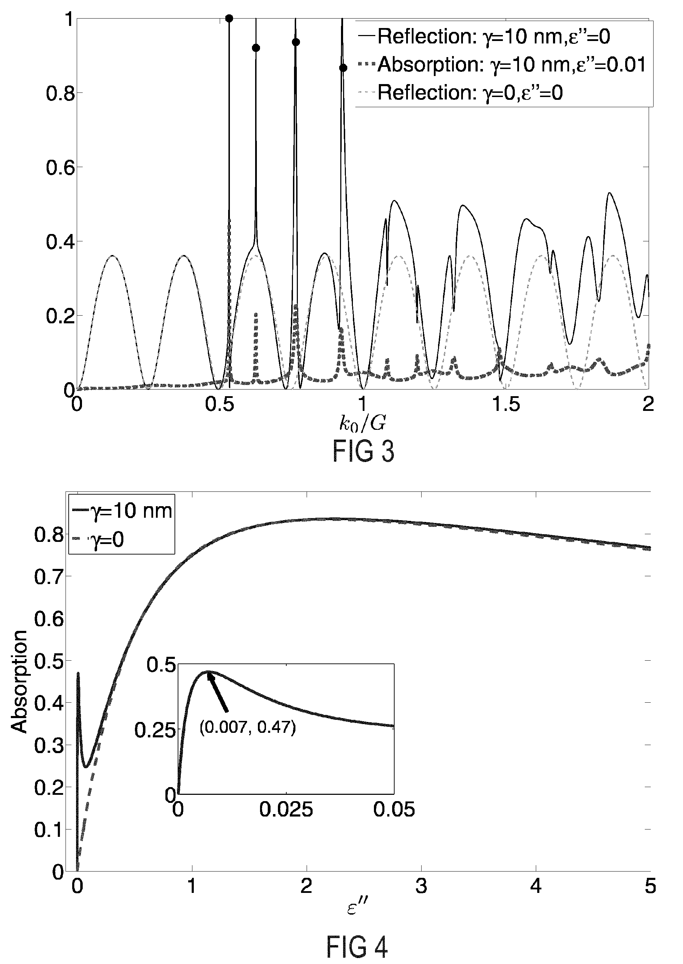

The total reflection of the grating for normal incidence is shown in Figure 3. Five Fourier harmonics in the field decomposition of Eq. (5) already give the converged results. Four strong resonances with the reflection equal to unity are observed in the region $0.5 < k_0/G < 1$ (black solid curve). This is the region, where three modes with p = 0, $\pm 1$ are propagating in the dielectric slab and only one zero[th] mode in the air. Also cusp-like features in the reflection spectra are seen for $k_0/G > 1$. The observed resonance reflection is due to the excitation of the waveguide modes in the slab. The frequencies of these modes in the absence of corrugation ($\gamma = 0$) are marked with black circles. Strictly speaking, in the presence of corrugation ($\gamma \neq 0$), the eigenfrequencies of the structure become complex. However, for small corrugation $\gamma \ll 2\pi/k_0$, the position of the resonances should be close to the eigenfrequencies of the slab with flat interface. Complex eigenfrequencies for other waveguide structures according to the invention are presented hereafter.

If the absorption term $\varepsilon''$ is introduced, the reflection resonances turn into absorption resonances, as shown by bold short dot curve in Figure 3. Figure 4 shows the dependence of the absorption at resonance near $k_0/G = 0.5$ as a function of $\varepsilon''$. The first sharp peak at $\varepsilon''_{max} = 0.007$ corresponds to resonance absorption on the waveguide modes of the slab. After this resonance, as $\varepsilon''$ increases the absorption grows. This effect is due to the net attenuation of the field in the slab. At $\varepsilon'' = 2.25$ the absorption reaches its maximum value. In the limit of high $\varepsilon''$ the reflection tends to unity, due to high dielectric contrast. The absorption accordingly tends to zero. Advantageously, the change in the real part of the permittivity by $\varepsilon' \rightarrow \varepsilon' + \varepsilon''_{max}$, causes an extremely negligible shift (less than a line width) in the reflection spectra.

Such a shift can not be measured experimentally.

In the considered case, the waveguide absorption peak is smaller than the broad one, corresponding to the net absorption, as seen in Figure 4. This peak can advantageously be larger and even reach unity for the preferred embodiments described later. This means that the introduction of small absorption $\varepsilon''$ can almost completely turn the incident radiation into heat, which might be advantageously used for detecting a physical state change according to the invention.

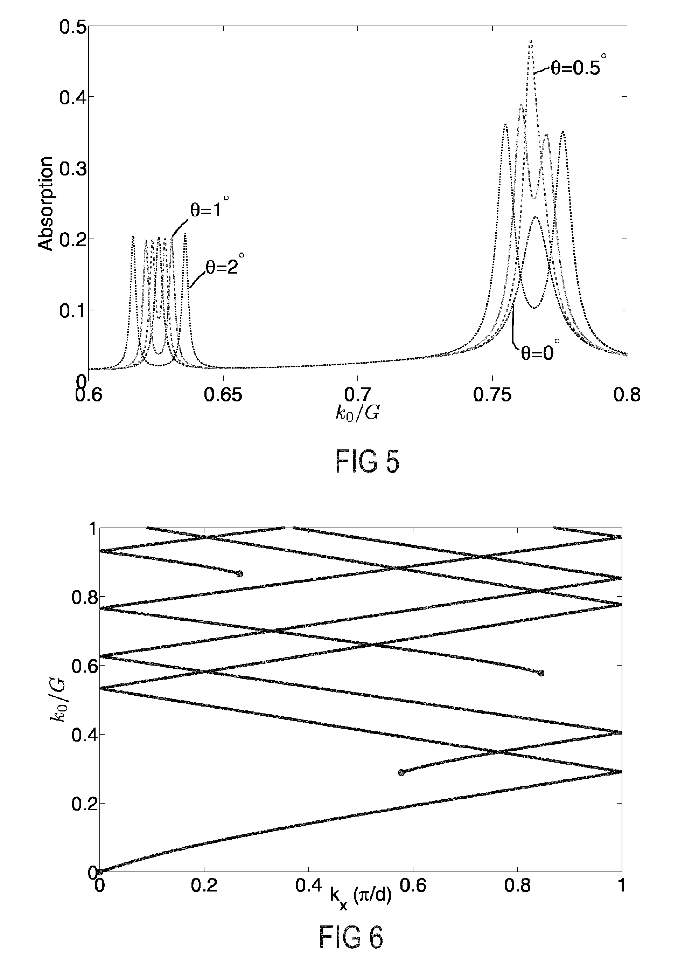

Another peculiarity of the resonant reflection and absorption according to the present invention is the extreme sensitivity to the angle of incidence $\theta$. Figure 5 shows the angular dependence of the absorption for two of the peaks. As seen, both of the peaks split into two, as the angle of incidence $\theta$ increases. This can be understood from the dispersion diagram of the waveguide modes, which is shown in Figure 6. The modes are doubly degenerate for normal incidence ($k_x = 0$), therefore one absorption peak is observed. For the inclined incidence, the degeneracy is broken. Therefore, each of the peaks splits into two. Moreover, the second absorption peak experiences a significant increase in the magnitude for inclined incidence.

We will now describe preferred embodiments of waveguide structures according to the invention:

Figure 7 describes a first preferred embodiment of the waveguide structure 10 of the GMR sensor 1 according to the present invention, wherein said waveguide structure 10, and in particular its first part 11, comprises at least one periodic structure configured for interacting with said environment 2. Said periodic structure comprises one or several units 111, which might be for example sloping pyramids, preferentially arranged in a hexagonal lattice. Said periodic structure might be bound to a surface of the waveguide structure 10 as shown in Fig. 7, or embodied in said waveguide structure 10. In particular, said periodic structure may lay on a first face of said first part 11. Said first part 11 is for example a slab comprising two faces, respectively said first face and a second face, and lateral surfaces, wherein the first face is structured with said one or more units 111 in order to form said periodic structure, and the second face is interfacing with the second part 12, which might also be a slab. The first part 11 is thus preferentially formed by a slab having a first face on which are bound said units 111, which results thus in a first part 11 having a periodic boundary that is configured for interacting with said environment 2.

Preferentially, the angle between the lateral faces of each pyramid and the horizontal plane of said first face is $\alpha = 54.74°$. In particular, the units 111, e.g. said pyramids, are arranged in a hexagonal lattice, with a translation vector $T = m_1 b_1 + m_2 b_2$, wherein $|b_1| = |b_2| = d$, $m_{1,2} = 0, \pm 1, \pm 2, ....$ In particular, $\varepsilon' = 6.7$, $d = 700$ nm, the thickness of the slab $h_w = 450$ nm, and the height h of each unit, e.g. said pyramid, is $h = 200$ nm. In particular, the basis of each pyramid is a square with a side length $a = 440$ nm. In particular, the angle $\beta$ formed by the lattice vector $b_1$ and $b_2$ is $\beta = 60°$. Preferentially, each pyramid is a truncated pyramid. The first part 11 and said one or more units 111, i.e. said pyramids, are preferentially made of the same material, which is in particular said constituent material characterized by a complex dielectric permittivity $\varepsilon = \varepsilon' + i \cdot \varepsilon''$, wherein preferentially said constituent material is characterized by dielectric permittivity that becomes complex only when an interaction of the first part 11 with said environment 2 takes place. The second part 12, which can be for example a substrate assumed to be infinite for the purpose of calculation, has in particular a permittivity $\varepsilon_s$ that has only a real part, for example $\varepsilon_s = 2.13$. For the purpose of calculation of absorption of said waveguide structure 10 according to the first preferred embodiment, we may consider an optical signal incident from the vacuum and characterized by a wave vector k:

$$k_x = 0, k_y = k_0 \sin\theta, k_z = k_0 \cos\theta \quad (10)$$

The light source 14 is for example positioned so that the optical signal is incident on said first part 11 of the waveguide structure 10. Said optical signal might be for example a light with electric field components $E = (0, E_y, 0)$. For the purpose of calculation, said optical signal is in particular incident normally to the first face of said first part 11, that is $\theta = 0°$, $k_x = k_y = 0$. The diffraction threshold frequencies into vacuum and the second part 12 for the considered skewed lattice read:

$$f_{m1,m2} = \frac{c}{\sqrt{\varepsilon_{v,s}}} \frac{1}{d \sin\beta} \sqrt{m_1^2 + m_2^2 - 2m_1 m_2 \cos\beta}$$

where $\beta$ is the angle between the lattice, d is the length of the lattice vectors and $\{m_1, m_2\}$ are integers. In particular, for the considered hereafter frequency range 200-360 THz, only the first diffraction order into substrate is opened at $f_{10} = 338.8$ THz.

In the absence of units 111 arranged in a periodic structure, the waveguide structure modes of the first preferred embodiment are purely guided and their eigenfrequencies are real. The lifetime of such modes is infinite and they cannot be excited by an optical signal or light incident from vacuum. Periodic arrangement of said units 111, e.g. the pyramids, serves for coupling of the incoming light with the waveguide modes. The eigenfrequencies become, generally speaking, complex. Using the notation $\exp(-i\omega t)$, the eigenfrequencies have the form $\omega_1 - i\omega_2$, so that the fields decay in time domain $\exp(-i\omega_1 t - \omega_2 t)$.

Reflection spectrum of the structure is shown in Figure 8. The strong features in the spectrum are due to the excitation of the waveguide modes. Eight strong resonances, with reflection efficiency equal to unity are observed in the spectra below the $f_{10}$ = 338.8 THz. Two of these resonances at f = 221.8 and f = 290.5 THz are extremely narrow, with line widths less than 0.1 THz. Also two resonances, which manifest themselves as abrupt cusps in the reflection are located above $f_{10}$.

Calculation of the eigenvalues in COMSOL confirms that the observed spectral features are the manifestation of the waveguide modes. For this purpose, Floquet-periodic boundary conditions were applied for the unit cell boundaries and scattering boundary conditions for the upper and lower boundaries. From the obtained list of eigenfrequencies, modes with nonzero imaginary part (purely guided modes cannot be excited by the incident plane wave and therefore do not manifest themselves in the spectra) and which are physically meaningful (according to the electric field distribution) are plotted in Figure 8. These eigenfrequencies, expressed in THz, are: 208.69 - 0.47i; 217.77 - 1.12i; 221.80 - 0.08i; 258.91 - 1.78i; 277.01 - 2.36i; 290.52 - 0.09i; 320.67 - 5.91i; 334.43 - 0.77i; 345.05 - 0.21i; 351.31 - 0.27i. As seen, the real part of the eigenfrequencies does not necessarily coincide with reflection maxima, but are rather close. The imaginary part of the eigenfrequencies represents the inverse lifetime (or radiation losses) of the modes and presents a good correlation with the resonance width.

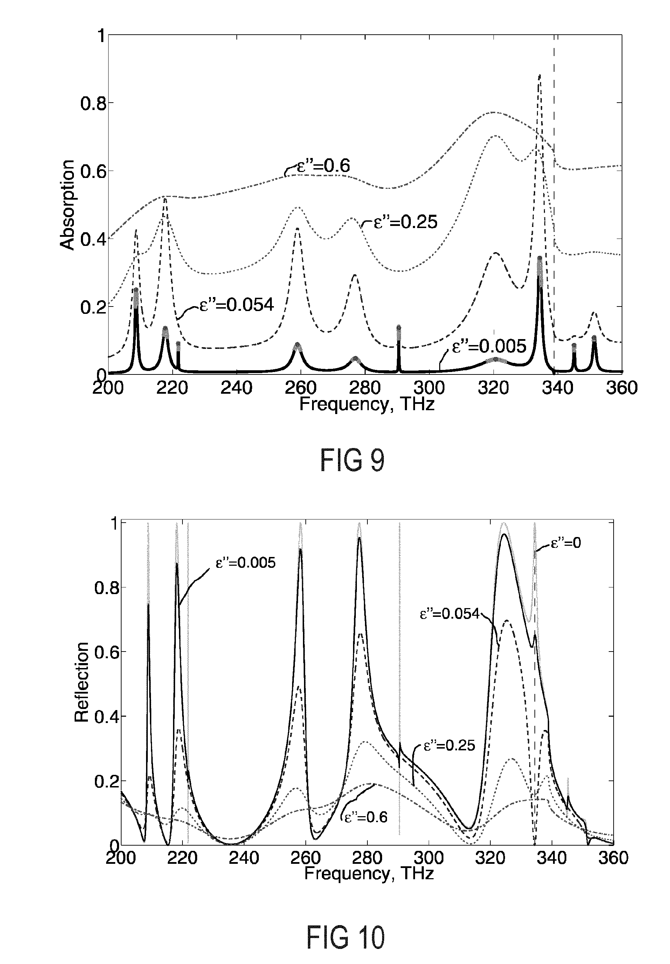

The imaginary part $\varepsilon''$ is an absorption term that plays a drastic role in spectra profile. According to said first preferred embodiment, the whole first part 11 experiences a change of the imaginary part $\varepsilon''$ of its dielectric permittivity when an interaction between said first part 11 and said environment occurs. The absorption spectra of the waveguide structure 10 according to said first preferred embodiment are shown in Figure 9 for different $\varepsilon''$ values. Note that the values of the imaginary part $\varepsilon''$ cited hereafter are in particular preferred values for the embodiments of GMR sensors according to the invention. In Figure 9, the black solid curve corresponds to $\varepsilon''$ = 0.005. The absorption peaks coincide very well with the aforementioned eigenfrequencies. Because the perturbation $\varepsilon''$ = 0.005 is very small, it almost does not change the eigenfrequency values. All resonance, even the extremely narrow ones at f = 221.8 and f = 290.5 THz are clearly seen in the absorption spectra. The increase of the absorption up to specific value $\varepsilon''$ = 0.054 causes several phenomena. First, the narrow resonances at f = 221.8 and f = 290.5 THz are smeared. Second, the resonances generally become stronger, except at f = 290.5 THz. The resonance at 334.4 THz, reaches an impressive value of almost 0.9. Further increase of $\varepsilon''$ makes the resonance less pronounced and at $\varepsilon''$ = 0.6 all the resonances are smeared. Therefore, the constituent material according to the invention is notably characterized by a dielectric permittivity having an imaginary part $\varepsilon''$ characterized by a sufficiently small value for distinguishing absorption at a resonant frequency from absorption at non-resonant frequency.

The reflection spectra for the same $\varepsilon''$ values are shown in Figure 10. The reflection at resonances accordingly decreases for the increasing $\varepsilon''$ values. In particular, the reflection resonance at 334.4 THz (black dashed straight line) drops from unity to zero for specific value $\varepsilon''$ = 0.054. Ninety percents of the energy is absorbed and the rest ten is transmitted. Advantageously, the detector according to the invention is able to measure absorption resonance effects and reflection resonance effects, for example by means of a temperature sensor combined to a spectrometer, for measuring multiple interaction types of the environment with said GMR sensor.

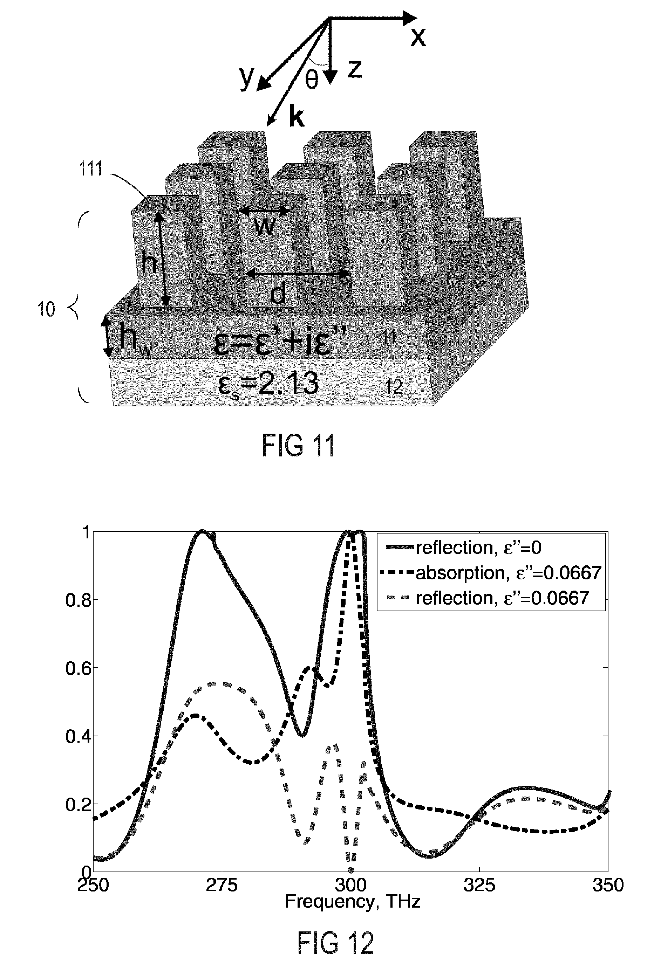

As previously demonstrated, high absorption can be achieved in GMR structures even with extremely small losses. In particular, the GMR sensor according to the invention is characterized by an absorption reaching unity and a full conversion of reflection of the incident optical signal into absorption. For example, Figure 11 presents a second preferred embodiment of a waveguide structure 10 for a GMR sensor according to the invention advantageously characterized by an absorption reaching unity and a full conversion of reflection into absorption at a specified frequency 300 THz. The waveguide structure 10 is in particular characterized by five optimized parameters, wherein four parameters are geometrical parameters and one is the imaginary part $\varepsilon''$ which represents the material absorption term. The first part 11 of the waveguide structure 10 of said second preferred embodiment is in particular a slab comprising a first face parallel to a second face, and lateral surfaces. A periodic structure or lattice comprising an arrangement of units 111 is attached to said first face. Said units 111 are preferentially parallelepipeds or bricks, preferentially arranged according to a square lattice. Each parallelepiped is in particular characterized by a height h = 610 nm measured from said first face, a width w = 330 nm and separated from one another according to a pitch d = 680 nm. Preferentially, the distance $h_w$ separating the first face from the second face, i.e. the thickness of said slab, is $h_w$ = 275 nm. Preferentially, said first part 11 is constituted by a constituent material characterized by a complex dielectric permittivity $\varepsilon = \varepsilon' + i\cdot\varepsilon''$, wherein preferentially $\varepsilon'$ = 6.7. The second part 12 is in particular characterized by a dielectric permittivity which has only a real part $\varepsilon_s$ = 2.13. The second part 12 is in particular a slab interfacing said first part 11 in order to form said waveguide structure 10.

Advantageously, the absorption peak of the second preferred waveguide structure embodiment reaches unity (see dash-dotted line in Figure 12), and reflection is accordingly zero (see dashed line). When no losses are present in the waveguide structure 10, the reflectivity at 300 THz is almost unity (solid line). Advantageously a small absorption term can fully convert reflection resonance into absorption for said second preferred embodiment of the waveguide structure 10. This effect allows in particular using a thermometer as detector 15 for sensing a change of a physical state in said environment, instead of an optical detector. If, for example, the waveguide structure 10 acquires some nonzero $\varepsilon$" in the presence of gas, then the incident light or optical signal will be strongly absorbed, which leads to a strong heating of the waveguide structure 10. Said strong heating can be detected by said detector 15 of the GMR sensor by a simple temperature measurement. Said detector 15 may for example send an alert signal when a measured temperature value exceeds a predefined threshold.

The present invention concerns also a GMR sensor, wherein the first part 11 of the waveguide structure 10 comprises a thin layer configured and positioned for interacting with said environment 2. For example, said thin layer covers, at least partially, said first face of the first part 11 and forms an interaction surface that is constituted of a material that is different from the material constituting the rest of said first part 11. For example, said layer covers integrally said first face and the units 111 are periodically arranged on said layer for forming said periodic structure. Said layer might also be embodied in said first part 11. Said layer is preferentially a thin absorbing film configured for being in contact with the environment and that is able to change the imaginary part $\varepsilon$" of its dielectric permittivity in function of its interaction with said environment.

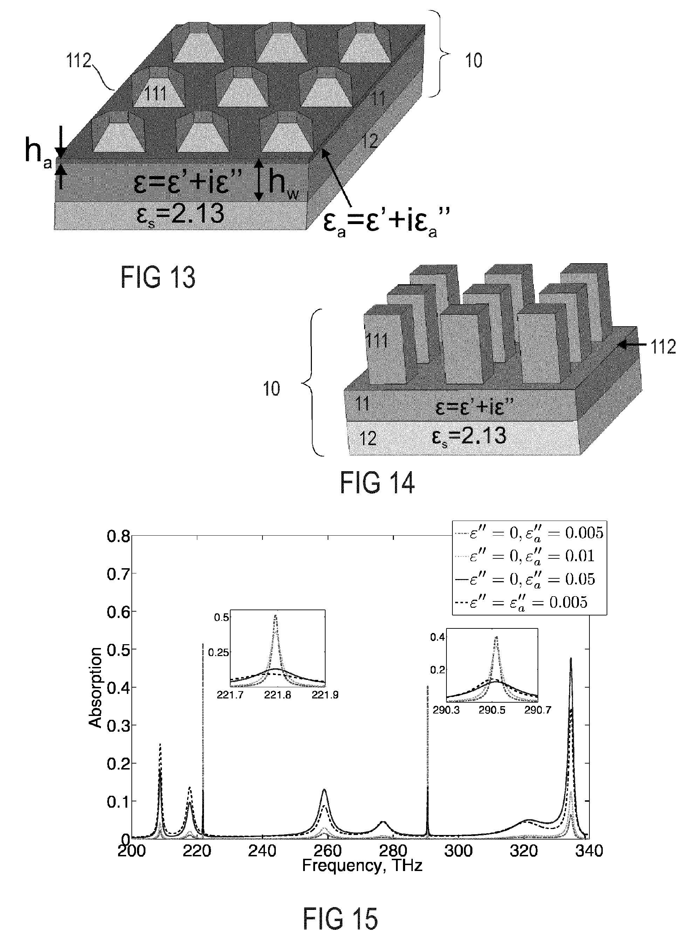

In particular, Figure 13 and Figure 14 present respectively a third and a fourth preferred embodiment of a waveguide structure 10 of a GMR sensor according to the invention. The third, respectively the fourth, preferred embodiment only differs from the first, respectively second, preferred embodiment shown in Figure 7, respectively Figure 11, in that

- the first face of the first part 11 is covered by a homogeneous layer 112 on which are arranged the units 111 of the periodic structure of preferential thickness ha= 50 nm that possesses losses, for example, said thin layer 112 is characterized by a dielectric permittivity $\varepsilon_a = \varepsilon_a' + i \cdot \varepsilon_a"$, wherein $\varepsilon_a" \neq 0$ and $\varepsilon_a' = \varepsilon'$. According to another particular embodiment (not shown), areas of the first face situated between the units 111, for example between said sloping pyramids and respectively between said parallelepipeds, might be covered by said thin layer 112;

- the imaginary part $\varepsilon$" of the dielectric permittivity of the material constituting the first part 11 and the units 111, i.e. said pyramids and respectively said parallelepipeds, is equal to zero, $\varepsilon" = 0$, and its real part satisfies $\varepsilon_a' = \varepsilon'$.

Figure 15 presents the absorption for different values of $\varepsilon_a"$ in function of the incident optical signal frequency for the third preferred embodiment. For the purpose of calculation, only normally incident light or optical signal is considered, but GMR sensors with oblique incident optical signals are also presently claimed. Figure 15 shows that absorption at resonances is strong even for small losses. Advantageously, absorption resonances become stronger as $\varepsilon_a"$ increases, except for two resonances at f = 221.8 and f = 290.5 THz, which is due to the fact that each absorption resonance reaches its maximum at some optimal value of $\varepsilon$". For the sake of comparison black dashed line in Figure 15 corresponds to the case wherein losses are present throughout the first part 11. Advantageously, due to small values of $\varepsilon_a"$, the position of the resonances remains almost unaffected. Preferentially, said thin layer 112 is a monolayer of graphene. Advantageously a graphene monolayer has the ability to change its conductivity in the presence of external electric fields or to absorb hydrogen.

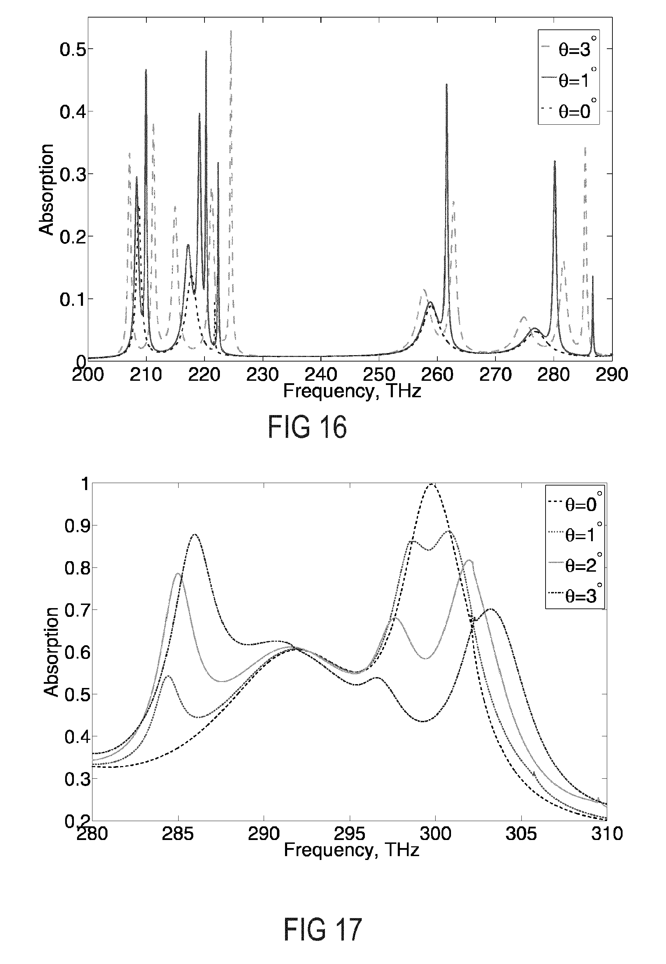

Preferentially, the light source 14 is configured for providing an optical signal obliquely incident on the second part 12 or on the first part 11 of the waveguide structure 10. Oblique incident optical signals refer to optical signals which main direction of propagation makes an angle $\theta$ with the second part 12/first part 11 of the waveguide structure 10, wherein $0 < \theta < 90$. Figures 16 and respectively Figure 17 show the absorption of the first and respectively second preferred embodiments for normal and oblique optical signal incidences with $\varepsilon" = 0.005$ and respectively $\varepsilon" = 0.0667$. The spectra become more complicated and more absorption resonances appear. For normal incidence some of the modes are inactive or degenerate due to symmetry properties. For oblique incidences said modes manifest themselves in the spectra. Advantageously, the peak maxima reach impressively high values. For example, peak at 224.5 THz for the first preferred embodiment exceeds 0.5, while the absorption outside of the resonance is below one percent. Such high sensitivity can not be obtained with the prior art techniques based on a change of the real part of the dielectric permittivity.

To summarize, the present invention concerns a GMR sensor that utilizes the absorption characterized by the imaginary part $\varepsilon$" of the dielectric permittivity for achieving the detection of a change of a physical state in an environment. The heart of the GMR sensor according to the present invention is a periodic dielectric waveguide structure 10 in which resonant leaky modes are excited by an incident optical signal. Preferentially, the resonant leaky modes are induced on a dielectric, or a semiconductor, or a metallic periodic layer patterned in one or two or even three dimensions on a first face 111 of a first part 11 or embodied in said first part 11 of the waveguide structure 10 of said GMR sensor 1, wherein said first face111 is in direct contact or free of contact with said environment 2 (see for e.g. Figure 1). The use of the imaginary part of the dielectric permittivity instead of its real part for sensing said environment allows to create GMR sensors that are more sensitive and comprise simpler detector systems compared to prior art GMR sensors. Indeed, even extremely small losses might lead to strong absorption peaks, while the change of the real part of permittivity $\varepsilon$' requires a much more significant change for an observable shift of the reflection resonance. Moreover the detecting scheme can be essentially simplified compared to prior art detectors that have to measure an optical response, since according to the present invention it is possible to use a temperature measurement for detecting a change of physical state in said environment.

The method and the absorption based GMR sensor according to the invention present therefore the following advantages compared to conventional GMR sensors:

- absorption-based GMR (AGMR) sensors can be designed to exhibit negligible spectral shift, which is advantageous for the purpose of measurements;
- unlike conventional GMR sensors, AGMR sensors are not restricted to optically transparent materials. This provides much more degrees of freedom in the design and offers the possibility of low-cost sensors. It allows also the use of material that is opaque to the incident wave/signal for the waveguide structure, in particular for said first part 11;
- material losses are not required to be present throughout the structure. Even very thin layers, which are located in the structure (or in the nearest vicinity), can provide resonant absorption effects;
- losses in materials can be modified in various ways: by means of the interaction with the external environment (gasses), by pressure influence, by external electromagnetic fields, etc.;
- by appropriately selecting the absorbing material one may tune AGMRs very well to the desired measurement;
- a high sensitivity, a versatility of sensing applications, a flexibility concerning materials to be utilized, and a simplicity of the detecting scheme;
- the resonant absorption effect may utilize new detecting schemes, which allow one to detect quantities that are out of the reach of standard GMR sensors.

**Claims**

1. Guided Mode Resonance sensor (1) for sensing a physical state change of an environment (2), said Guided Mode Resonance sensor (1) comprising:

   - a light source (14) for producing an optical signal;
   - a first part (11) designed for interacting with said environment (2);
   - a waveguide structure (10) configured for being illuminated by said optical signal incident on a second part (12) of said Guided Mode Resonance sensor, wherein said waveguide structure (10) is configured for responding to an interaction of its first part (11) with the environment (2) by a change of at least one absorption resonance of an absorption resonant guided mode that characterizes said waveguide structure (10);
   - a detector (15) capable of measuring absorption resonance occurring in said waveguide structure (10) when illuminated by said optical signal in function of the interaction of said first part (11) with said environment (2) for detecting said physical state change.

2. Guided Mode Resonance sensor (1) according to claim 1, **characterized in that** said waveguide structure (10) comprises at least one constituent material **characterized by** a complex dielectric permittivity $\varepsilon = \varepsilon' + i \cdot \varepsilon''$, where $\varepsilon'$ is the real part of the dielectric permittivity and $\varepsilon''$ is its imaginary part.

3. Guided Mode Resonance sensor (1) according to claim 2 configured for responding to said interaction by either a change of the imaginary part $\varepsilon''$ of the dielectric permittivity or a change of its real part $\varepsilon'$.

4. Guided Mode Resonance sensor (1) according to one of the claims 1 to 3, **characterized in that** said first part (11) comprises at least one periodic structure constituted by a periodical arrangement of one or more units (111).

5. Guided Mode Resonance sensor (1) according to claim 4, wherein said unit (111) is a pyramid or a parallelepiped.

6. Guided Mode Resonance sensor (1) according to one of the claims 2-5, **characterized in that** said constituent material is a thin absorbing film (112) or an adsorbent or an inclusion embodied in the volume of the waveguide structure (10) or positioned in the nearest vicinity of said waveguide structure (10).

7. Guided Mode Resonance sensor (1) according to claim 6, **characterized in that** said first part (11) is covered by said thin absorbing film (112).

8. Guided Mode Resonance sensor (1) according to one of the claims 6 or 7, **characterized in that** said first part (11) contains one or several thin absorbing film (112).

9. Guided Mode Resonance sensor (1) according to one of the claims 6-8, wherein said thin absorbing film (112) is a graphene monolayer or a layer of a biochemical substance, or a layer comprising tungsten trioxide.

10. Guided Mode Resonance sensor (1) according to one of the claims 1-9, wherein said second part (12) comprises an optical element (121) for shaping said optical signal.

11. Guided Mode Resonance sensor (1) according to one of the previous claims, **characterized by** an absorption reaching unity and a full conversion of reflection of the incident optical signal into absorption.

12. Method for sensing a physical state change in an environment (2), the method comprising the following steps:

    - positioning a Guided Mode Resonance sensor (1) so that at least a first part (11) of said Guided Mode Resonance sensor (1) is able to interact with said environment (2);
    - illuminating a waveguide structure (10) of said Guided Mode Resonance sensor (1) by means of an optical signal incident on a second part (12) of said Guided Mode Resonance sensor (1), wherein said waveguide structure (10) is configured for responding to an interaction of its first part (11) with the environment (2) by a change of at least one absorption resonance of an absorption resonant guided mode that characterizes said waveguide structure (10);
    - measuring resonance absorption occurring in said waveguide structure (10) illuminated by said optical signal in function of the interaction of said first part (11) of the Guided Mode Resonance sensor (1) with said environment (2) for detecting said physical state change.

13. Method for sensing a physical state change in an environment (2) according to claim 12, **characterized in that** said waveguide structure (10) comprises at least one constituent material **characterized by** a complex dielectric permittivity $\varepsilon = \varepsilon' + i\cdot\varepsilon''$, where $\varepsilon'$ is the real part of the dielectric permittivity and $\varepsilon''$ is its imaginary part.

14. Method for sensing a physical state change in an environment (2) according to claim 13, **characterized in that** in response to said interaction, either the imaginary part $\varepsilon''$ of the dielectric permittivity or its real part $\varepsilon'$ changes.

15. Method for sensing a physical state change in an environment (2) according to claim 13, **characterized in that** in response to said interaction, both the imaginary part $\varepsilon''$ of the dielectric permittivity and its real part $\varepsilon'$ change.

1

2

16

111

10

11

15A

121

12

15

14

15B

## FIG 1

$D_1$

$\theta$

$\varepsilon_1 = 1$

0

X

$D_2$

d

z

L

$\varepsilon_2 = \varepsilon' + i\varepsilon''$

$D_3$

$\varepsilon_1 = 1$

## FIG 2

FIG 3

FIG 4

FIG 5

FIG 6

**FIG 7**

**FIG 8**

FIG 9

FIG 10

FIG 11

FIG 12

FIG 13

FIG 14

FIG 15

FIG 16

FIG 17

Europäisches
Patentamt

European
Patent Office

Office européen
des brevets

**EUROPEAN SEARCH REPORT**

Application Number

EP 12 18 7958

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | K. BOUGOT-ROBIN ET AL: "2D label-free imaging of resonant grating biochips in ultraviolet", OPTICS EXPRESS, vol. 18, no. 11, 24 May 2010 (2010-05-24), page 11472, XP55056146, ISSN: 1094-4087, DOI: 10.1364/OE.18.011472 | 1-4,6-9, 12-15 | INV. G01N21/77 |
| Y | * abstract * <br> * figures 1,2 * <br> * page 11474 - page 11477, paragraph 1 * | 5 | |
| X | DAVOINE L ET AL: "Visual gas sensors based on dye thin films and resonant waveguide gratings", PROCEEDINGS OF THE SPIE - THE INTERNATIONAL SOCIETY FOR OPTICAL ENGINEERING SPIE - THE INTERNATIONAL SOCIETY FOR OPTICAL ENGINEERING USA, vol. 8073, 2011, XP40559052, ISSN: 0277-786X | 1-4,6,7, 12-14 | |
| Y | * page 1, last paragraph - page 2, paragraph 2 * <br> * page 2, last paragraph * <br> * page 6 * <br> * figures 2,8 * | 5 | **TECHNICAL FIELDS SEARCHED (IPC)** <br><br> G01N |
| X | US 6 483 959 B1 (SINGH KIRAT [GB] ET AL) 19 November 2002 (2002-11-19) <br> * column 16, line 1 - column 17, line 4 * <br> * column 18, line 1 - line 4 * <br> * column 18, line 28 - line 52 * <br> * column 2, line 48 - line 50 * <br> * figures 19,20 * | 1-3,6,8, 10-14 | |

-/--

The present search report has been drawn up for all claims

| Place of search | Date of completion of the search | Examiner |
|---|---|---|
| Munich | 15 March 2013 | D'Alessandro, Davide |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

.................................................................
& : member of the same patent family, corresponding
   document

EPO FORM 1503 03.82 (P04C01)

Europäisches
Patentamt

European
Patent Office

Office européen
des brevets

**EUROPEAN SEARCH REPORT**

Application Number

EP 12 18 7958

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>Y | WO 92/03720 A1 (FISONS PLC [GB])<br>5 March 1992 (1992-03-05)<br>* page 2, last paragraph - page 3 *<br>* page 4 - page 5 *<br>* page 13 *<br>* figures 1,2 * | 1-3,6,8,<br>10-14<br>9 | |
| Y | WO 2011/040923 A1 (HEWLETT PACKARD DEVELOPMENT CO [US]; TANG JING [US]; WU WEI [US]; XIA) 7 April 2011 (2011-04-07)<br>* figure 5 *<br>* page 5, line 17 - line 26 * | 5 | |
| Y | US 2007/172894 A1 (GENICK CHRISTINE C [US] ET AL) 26 July 2007 (2007-07-26)<br>* figure 1b *<br>* paragraph [0053] * | 5 | |
| Y | SHAOJUN GUO ET AL: "Graphene and its derivative-based sensing materials for analytical devices",<br>JOURNAL OF MATERIALS CHEMISTRY,<br>vol. 21, no. 46,<br>1 January 2011 (2011-01-01), page 18503,<br>XP55056604,<br>ISSN: 0959-9428, DOI: 10.1039/c1jm13228h<br>* section 2.6 *<br>* figure 13 * | 9 | TECHNICAL FIELDS SEARCHED (IPC) |
| A | OLAF STENZEL: "Resonant reflection and absorption in grating waveguide structures",<br>PROCEEDINGS OF SPIE,<br>vol. 5355, 28 May 2004 (2004-05-28), pages 1-13, XP55056292,<br>ISSN: 0277-786X, DOI: 10.1117/12.522255<br>* section 2.3 *<br>* figure 7 * | 1-15 | |

The present search report has been drawn up for all claims

| Place of search | Date of completion of the search | Examiner |
|---|---|---|
| Munich | 15 March 2013 | D'Alessandro, Davide |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**ANNEX TO THE EUROPEAN SEARCH REPORT
ON EUROPEAN PATENT APPLICATION NO.** EP 12 18 7958

This annex lists the patent family members relating to the patent documents cited in the above-mentioned European search report.
The members are as contained in the European Patent Office EDP file on
The European Patent Office is in no way liable for these particulars which are merely given for the purpose of information.

15-03-2013

| Patent document cited in search report | | Publication date | Patent family member(s) | | Publication date |
|---|---|---|---|---|---|
| US 6483959 | B1 | 19-11-2002 | AU | 3259199 A | 15-09-1999 |
| | | | CA | 2321891 A1 | 02-09-1999 |
| | | | EP | 1060383 A2 | 20-12-2000 |
| | | | JP | 2002505425 A | 19-02-2002 |
| | | | US | 6483959 B1 | 19-11-2002 |
| | | | WO | 9944042 A2 | 02-09-1999 |
| WO 9203720 | A1 | 05-03-1992 | DE | 69115493 D1 | 25-01-1996 |
| | | | DE | 69115493 T2 | 04-07-1996 |
| | | | EP | 0543831 A1 | 02-06-1993 |
| | | | JP | H05509402 A | 22-12-1993 |
| | | | US | 5434663 A | 18-07-1995 |
| | | | WO | 9203720 A1 | 05-03-1992 |
| WO 2011040923 | A1 | 07-04-2011 | US | 2012182550 A1 | 19-07-2012 |
| | | | WO | 2011040923 A1 | 07-04-2011 |
| US 2007172894 | A1 | 26-07-2007 | US | 2007172894 A1 | 26-07-2007 |
| | | | US | 2010196925 A1 | 05-08-2010 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120140208 A1

**Non-patent literature cited in the description**

- **L. BRAGINSKY ; V. SHKLOVER.** Light propagation in an imperfect photonic crystal. *Phys. Rev. B,* 2006, vol. 73, 085107

- **L. LI.** Formulation and comparison of two recursive matrix algorithms for modeling layered diffraction gratings. *J. Opt. Soc. Am.,* 1996, vol. A/13, 1024-1035